# EUROPEAN PATENT APPLICATION

(11) **EP 2 083 439 A1**
(43) Date of publication of application: **29.07.2009**
(21) Application number: 09250194.9
(22) Date of filing: 26.01.2009
(51) Int. Cl.: H01J 17/49

(54) **Filter for a plasma display panel and plasma display device having the filter**

(30) Priority: 24.01.2008 KR 20080007552
(71) Applicant: Samsung SDI Co., Ltd., Suwon-si, Gyeonggi-do (KR)
(72) Inventor: Lee, Sang-Mi, Seocho-gu Seoul (KR); Hwang, Cha-Won, Seocho-gu Seoul (KR); Lee, Sung-Yong, Seocho-gu Seoul (KR)
(74) Representative: Taor, Simon Edward William

(57) **Abstract**

A filter for a plasma display panel (PDP) is configured to provide a white balance of the PDP viewed through the filter in a negative region of a minimum perceptible color difference (MPCD).

## Description

### BACKGROUND OF THE INVENTION

### 1. Field of the Invention

Embodiments relate to a filter for a plasma display panel (PDP) and a plasma display device having the filter. More particularly, embodiments relate to a filter for a PDP, by which visibility is improved by adjusting white balance, and a plasma display device having the filter.

### 2. Description of the Related Art

A plasma display device includes a plasma display panel (PDP) that displays an image by discharging a discharge gas to excite phosphors to emit visible light. The plasma display device is thin, large-scaled, and has various display characteristics, such as luminance, contrast, afterimages, and viewing angles, which are superior to those of a conventional cathode-ray tube (CRT) display device. Thus, the plasma display device is regarded as a next generation large-scale flat panel display device.

In general, a filter may be directly attached on a front surface of the PDP. The filter absorbs unnecessary light generated from phosphors of the PDP, properly adjusts transmittance of necessary light, thus adjusting an emission color and white balance of the PDP. If neon (Ne) is used as a discharge gas, orange light is generated. A conventional filter absorbs the orange light, increasing color purity of red light.

However, due to the increased color purity of the red light, a minimum perceptible color difference (MPCD) output by the PDP is in a positive region. Thus, a reddish white color is generated. However, to the human eye, reddish white has lower visibility and clarity than bluish white.

### SUMMARY OF THE INVENTION

Embodiments are therefore directed to a filter for a plasma display panel (PDP) and a plasma display device including the same, which substantially overcomes one or more of the disadvantages of the related art.

It is therefore a feature of an embodiment to provide a filter for a PDP and a plasma display device including the same, which improves visibility by adjusting white balance.

At least one of the above and other features and advantages may be realized by providing a filter for a plasma display panel (PDP), the filter configured to provide a white balance of the PDP viewed through the filter in a negative region of a minimum perceptible color difference (MPCD).

An optical transmittance curve of the filter may have first, second, and third absorption peaks, wherein the first absorption peak is in a wavelength region of about 470 nm to about 520 nm, the second absorption peak is in a wavelength region of about 520 nm to about 560 nm, and the third absorption peak is in a wavelength region of about 560 nm to about 610 nm.

A transmittance of the first absorption peak may be smaller than a transmittance of the second absorption peak and larger than a transmittance of the third absorption peak.

A transmittance of the first absorption peak may be about 20% to about 50%, a transmittance of the second absorption peak may be about 40% to about 60%, and a transmittance of the third absorption peak is about 5% to about 25%.

The filter may include a near infrared shielding layer, an electromagnetic wave and/or static electricity blocking layer, and/or an antireflection layer.

At least one of the above and other features and advantages may be realized by providing a plasma display device, including a plasma display panel (PDP) configured to display an image, a driving circuit substrate configured to supply driving signals and electricity to the PDP and to control the PDP, a chassis configured to support the PDP and the driving circuit substrate, and a filter on a front surface of the PDP, the filter configured to provide a white balance of the PDP viewed through the filter in a negative region of a minimum perceptible color difference (MPCD).

According to a first aspect of the invention there is provided a filter as set out in Claim 1. Preferred features of this aspect are set out in Claims 2 - 10. According to a second aspect of the invention there is provided a plasma display device as set out in Claim 11.

### BRIEF DESCRIPTION OF THE DRAWINGS

The above and other features and advantages will become more apparent to those of ordinary skill in the art by describing in detail exemplary embodiments with reference to the attached drawings, in which:

FIG. 1 illustrates a Commission Internationale de l'Eclairage (CIE) xy chromaticity diagram;

FIG. 2 illustrates optical output and transmittance curves of a PDP and a filter for a PDP, respectively, according to an embodiment of the present invention;

FIG. 3 illustrates a schematic exploded perspective view of a plasma display device according to an embodiment of the present invention;

FIG. 4 illustrates a cross-sectional view of the plasma display device illustrated in FIG. 3 taken along a line IV-IV, according to an embodiment of the present invention; and

FIG. 5 illustrates a schematic cross-sectional view of a filter according to an embodiment of the present invention.

### DETAILED DESCRIPTION OF THE INVENTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the invention to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

As used herein, the expressions "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C" and "A, B, and/or C" includes the following meanings: A alone; B alone; C alone; both A and B together; both A and C together; both B and C together; and all three of A, B, and C together. Further, these expressions are open-ended, unless expressly designated to the contrary by their combination with the term "consisting of." For example, the expression "at least one of A, B, and C" may also include an nth member, where n is greater than 3, whereas the expression "at least one selected from the group consisting of A, B, and C" does not.

A filter for a plasma display panel (PDP), according to an embodiment of the present invention, may provide a white balance of the PDP in a negative region of a minimum perceptible color difference (MPCD). The MPCD represents how much a color is separated from a blackbody radiation locus, assuming that the color is indicated by a correlated color temperature. If the color is above the blackbody radiation locus, i.e., in an upper region, the color has a positive value. If the color is below the blackbody radiation locus, i.e., in a lower region, the color has a negative value.

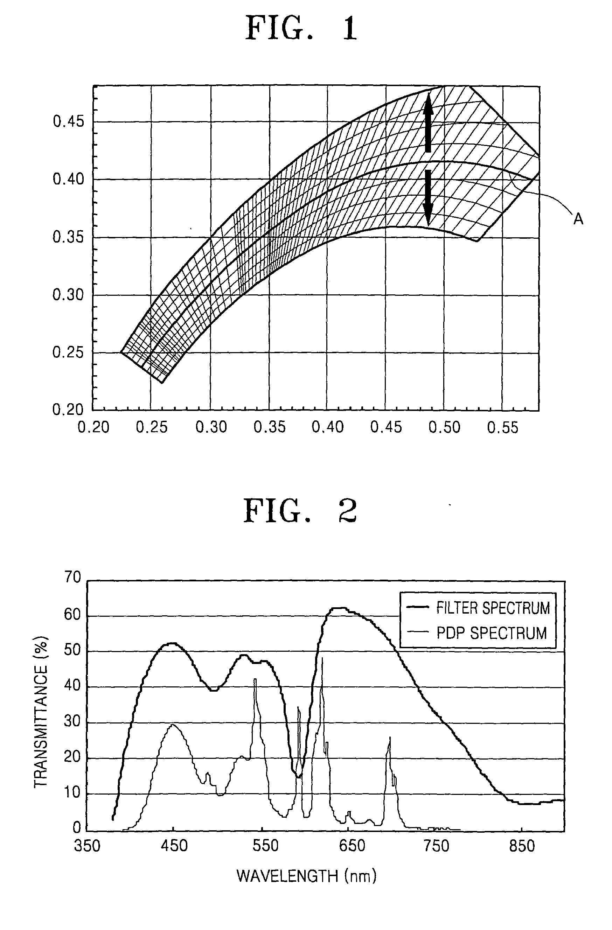

FIG. 1 illustrates a Commission Internationale de l'Eclairage (CIE) xy chromaticity diagram. Referring to FIG. 1, a right upward curve A represents a blackbody radiation locus. If a color coordinate is above the blackbody radiation locus A, an MPCD has a positive value. When the MPCD has a positive value, the white balance appears warmer, e.g., a reddish white. If the color coordinate is below the blackbody radiation locus A, the MPCD has a negative value. When the MPCD has a negative value, the white balance appears cooler, e.g., a bluish white.

Although a difference from a color temperature (correlated color temperature) is described above by using the MPCD with respect to the CIE xy chromaticity diagram, the same principle may be applied to a deviation with respect to an ultraviolet (UV) chromaticity diagram. A UV color temperature is represented as, for example, 5000K+0.002 (UV unit) or 5000K-0.005 (UV unit). It is intrinsically true that a deviation has a positive value if a color coordinate is disposed in an upper region of the blackbody radiation locus A, and has a negative value if the color coordinate is disposed in a lower region of the blackbody radiation locus A.

An emission color of a PDP transmitted through the filter according to an embodiment of the present invention may be a bluish white. Thus, visibility may be improved by controlling a spectrum of the filter to provide the white balance of the PDP in a negative region of the MPCD. Also, a color temperature may be improved.

FIG. 2 illustrates optical output and transmittance curves of a PDP and a filter for the PDP, according to an embodiment of the present invention.

Referring to FIG. 2, an optical transmittance curve of the filter has first, second, and third absorption peaks, which may be respectively formed in wavelength regions of about 470 nm to about 520 nm, about 520 nm to about 560 nm, and about 560 nm to about 610 nm. In more detail, a transmittance of the first absorption peak may be smaller than the transmittance of the second absorption peak and larger than the transmittance of the third absorption peak. Transmittances of the first, second, and third absorption peaks may be about 20% to about 50%, about 40% to about 60%, and about 5% to about 25%, respectively.

The first absorption peak may be in a wavelength region of about 470 nm to about 520 nm, i.e., between a blue color and a green color. Accordingly, color purities of the blue and green colors are improved by the first absorption peak. The transmittance of the first absorption peak may be about 20% to about 50%. For example, the transmittance in a wavelength region of about 500 nm may be about 39%. The transmittance of the first absorption peak may be smaller than the transmittance of the second absorption peak and larger than the transmittance of the third absorption peak.

The second absorption peak may be in a wavelength region of about 520 nm to about 560 nm, i.e., a green color. In particular, humans are typically most visually sensitive in a wavelength region of about 550 nm within the wavelength region of about 520 nm to about 560 nm. Accordingly, transmittance in the wavelength region of about 550 nm is important to improve visibility. The transmittance of the second absorption peak formed in the wavelength region of about 520 nm to about 560 nm may be about 40% to about 60%. For example, the transmittance in the wavelength region of about 550 nm may be about 48%. The transmittance of the second absorption peak may be larger than the transmittance of the first absorption peak.

The third absorption peak may be formed in a wavelength region of about 560 nm to about 610 nm, i.e., an orange color. In FIG. 2, a transmittance spectrum of the PDP has a high emission peak in a wavelength region of about 590 nm. The emission peak is caused by light that is generated when a discharge gas of the PDP is discharged. Due to the emission peak, the PDP may appear orange. The filter according to the current embodiment of the present invention thus may include the third absorption peak in the wavelength region of about 560 nm to about 610 nm to minimize the influence of the emission peak. The filter having the third absorption peak in the wavelength region of about 560 nm to about 610 nm may also improve color purity of a red color. The transmittance of the third absorption peak may be about 5% to about 25%. For example, the transmittance in a wavelength region of about 595 nm may be 15%. The transmittance of the third absorption peak may be smaller than the first absorption peak and the second absorption peak.

Table 1 shows various measurement values of a filter of a PDP, according to an embodiment of the present invention.

**[Table 1]**

| | Comparative Example 1 | Comparative Example 2 | Working Example |
|---|---|---|---|
| MPCD | 3.86 | 3.26 | -0.86 |
| Color Temperature | 8352 | 9865 | 10193 |
| Color Reproduction Area | 0.071 | 0.075 | 0.082 |
| Color Reproducibility | 95.70% | 101.63% | 110.23% |

Referring to Table 1, measurement values of comparative example 1 are obtained when no filter is on the PDP and measurement values of comparative example 2 are obtained when a conventional filter is on the PDP. The conventional filter is a glass filter that absorbs a wavelength region of an orange color. Measurement values of a working example are obtained when the filter according to the current embodiment of the present invention is on the PDP. For example, the filter of the example embodiment has transmittances of 39%, 48%, and 15% in wavelength regions of 500 nm, 550 nm, and 596 nm, respectively. The measurement values of Table 1 are for a 50-inch PDP.

MPCDs of comparative examples 1 and 2 have positive values, e.g., 3.86 and 3.26, respectively. However, an MPCD of the working example has a negative value, e.g., -0.86. Thus, an emission color of the PDP is a bluish white and visibility is improved.

Color temperatures of comparative examples 1 and 2 are 8352 K and 9865 K, respectively. However, a color temperature of the working example is 10193 K. Thus, the color temperature of the working example is greater than that of the comparative examples 1 and 2.

Color reproduction areas of comparative examples 1 and 2 and the working example are 0.017, 0.075, and 0.082, respectively. Based on the color reproduction areas, color reproducibilities of comparative examples 1 and 2, and the working example are 95.7%, 101.63%, and 110.23%, respectively. A color reproducibility of comparative example 2 is just 5.9% greater than that of comparative example 1. However, the color reproducibility of the working example is 14.5% greater than that of comparative example 1. Thus, it is clear that the color reproducibility of the working example is greatly increased as compared to comparative examples 1 and 2.

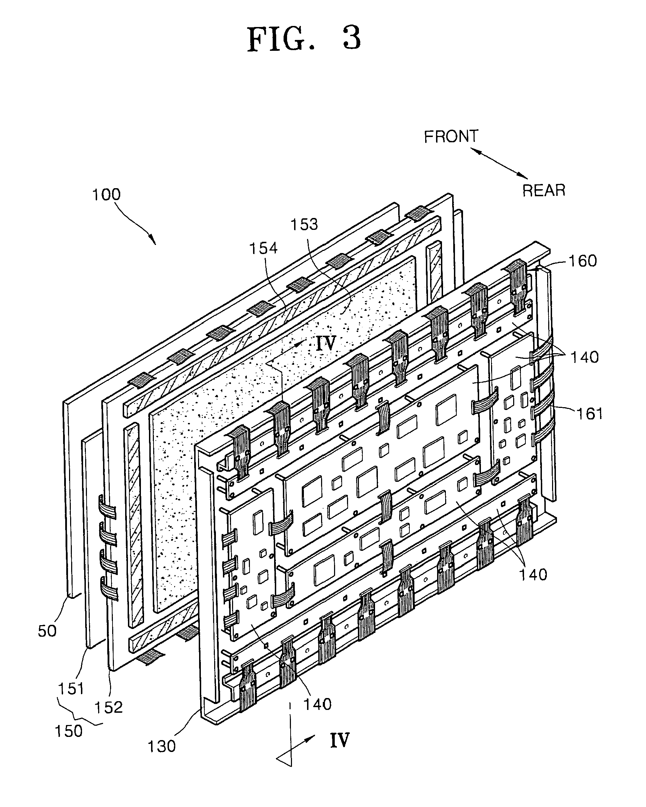

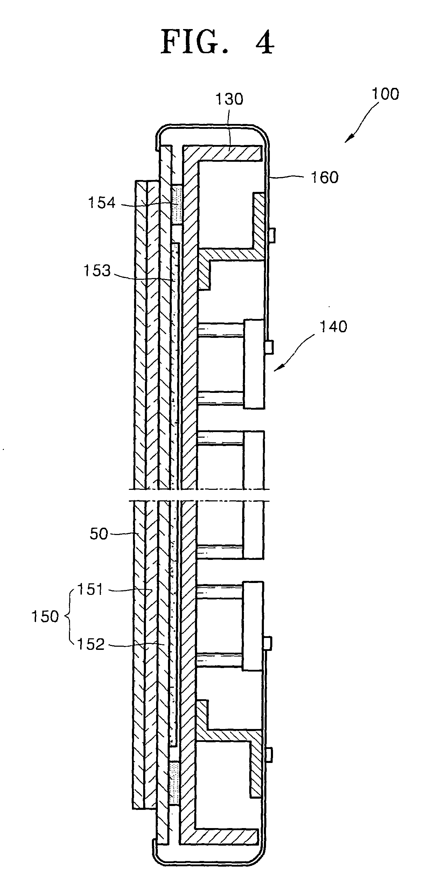

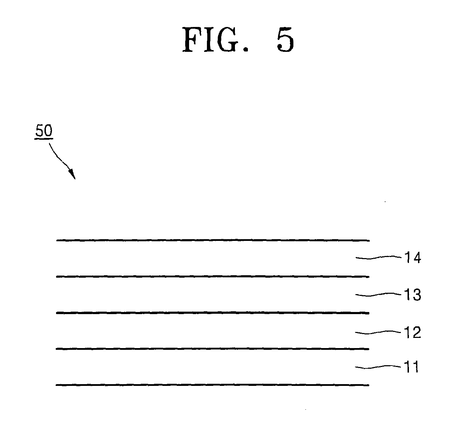

FIG. 3 illustrates an exploded perspective view of a plasma display device 100 having a filter 50, according to an embodiment of the present invention. FIG. 4 illustrates a cross-sectional view of the plasma display device 100 illustrated in FIG. 3 which is taken along a line IV-IV' according to an embodiment of the present invention. FIG. 5 illustrates a schematic cross-sectional view of the filter 50 illustrated in FIG. 3, according to an embodiment of the present invention. Here, a plasma display device is just an example of display devices to which a filter according to an embodiment of the present invention may be applied, and display devices are not limited to plasma display devices.

Referring to FIGS. 3 through 5, the plasma display device 100 may include a PDP 150, a chassis 130, and a circuit unit 140. The PDP 150 may include front and back panels 151 and 152 separated from and secured to each other.

The chassis 130 may be at the back of the PDP 150 and may structurally support the PDP 150. The chassis 130 may be formed of a metallic material having excellent rigidity, e.g., as aluminum or iron, or plastic.

The thermal conductive member 153 may be disposed between the PDP 150 and the chassis 130 in order to radiate heat generated by the PDP 150 during operation of the plasma display device 100 through the chassis 130.

An adhesive, e.g., a dual-sided tape 154, may be used to secure the PDP 150 and the chassis 130. Also, pieces of the dual-sided tape 154 may be disposed around the thermal conductive member 153 and the pieces of the dual-sided tape 154 may combine and fix the PDP 150 and the chassis 130 to each other.

The circuit unit 140 may be at the back of the chassis 130. A circuit for driving the PDP 150 may be wired on the circuit unit 140. Electrical signals may be transmitted to the PDP 150 by signal transmitters of the circuit unit 140. For example, flexible printed cables (FPCs), tape carrier packages (TCPs), and chips on film (COFs) may be used as the signal transmitters. According to the current embodiment of the present invention, FPCs 161 are disposed on left and right sides of the chassis 130 and TCPs 160 are disposed on upper and lower sides of the chassis 130.

The filter 50 according to the current embodiment of the present invention may be attached to a front surface of the PDP 150, e.g., by an adhesive layer. Details of an example of the filter 50 are described below. However, the present invention is not limited thereto. Various filters having characteristics of embodiments may be used.

The filter 50 may include a transparent material 11, e.g., glass, an electromagnetic wave and/or static electricity blocking layer 12, a near infrared (NIR) shielding layer 13, and an antireflection (AR) layer 14.

The transparent material 11 may be, e.g., glass, polyethylene terephthalate (PET), triacetyl cellulose (TAC), polyvinyl alcohol (PVA), polyethylene (PE), and so forth, and may have a thickness of about 10 µm to about 1,000 µm. The transparent material 11 may be attached to the electromagnetic wave and/or static electricity blocking layer 12 using an adhesive layer, e.g., an acrylic resin, a polyester resin, an epoxy resin, a urethane resin, and so forth, having a thickness of about 1 µm to about 100 µm.

The electromagnetic wave and/or static electricity blocking layer 12 may block electromagnetic waves generated from the PDP 150, and may include fiber meshes, metal meshes, a conductive layer, and so forth. For example, the electromagnetic wave and/or static electricity blocking layer 12 may be metal meshes formed of metallic elements, e.g., silver (Ag), copper (Cu), nickel (Ni), aluminum (Al), gold (Au), iron (Fe), Indium (In), zinc (Zn), platinum (Pt), chrome (Cr), lead (Pb), and so forth, or a multilayer thin film formed of the metallic elements. However, materials forming the electromagnetic wave and/or static electricity blocking layer 12 are not limited thereto. If a multilayer thin film is used, the film may have a thickness of about 10 nm to about 500 nm. If metal meshes are used, the meshes may have a thickness of about 1 µm to about 100 µm.

The NIR shielding layer 13 may include a compound that may absorb NIR, e.g., a resin containing Cu atoms, a resin containing a Cu compound or a phosphorus (P) compound, a resin containing a Cu compound or a thio derivative, a resin containing a tungsten (W)-based compound, a cyanine-based compound, and so forth.

The filter 50 according to the current embodiment of the present invention may also include the AR layer 14. The AR layer 14 may block reflection of external light and/or reduce scattered reflection that influences contrast. The AR layer 14 may be formed by stacking one or more materials, such as TiO₂, SiO₂, Y₂O₃, MgF₂, Na₃AlF₆, Al₂O₃, Bi₂O₃, Gd₂O₃, LaF₃, PbTe, Sb₂O₃, SiO, SiN, Ta₂O₅, ZnS, ZnSe, ZrO₂, etc. However, materials forming the AR layer 14 are not limited thereto. The AR layer 14 may have a thickness of about 10 nm to about 100 nm. The AR layer 14 may be formed using a coating method, a deposition method, a sputtering method, and so forth. However, methods of forming the AR layer 14 are not limited thereto.

A spectrum of the filter 50 is controlled by pigments or stains. For example, the pigments or stains may absorb wavelength regions of about 470 nm to about 520 nm, about 520 nm to about 560 nm, and about 560 nm to about 610 nm. The pigments or stains may be coated or deposited on the transparent material 11, may be in the transparent material, and/or may be in the adhesive layer securing the transparent material 11 to the PDP.

The filter 50 disposes white balance of the PDP 150 in a negative region of an MPCD, increases a color temperature, and thus improves visibility. Also, color reproducibility is improved.

The filter 50 may further block electromagnetic waves, reduce glare, and shields a NIR or Ne (orange) light. Furthermore, when the filter 50 is directly attached to the front surface of the PDP 150, a double-image problem may be avoided.

Hereinabove, a plasma display device is described as an example of a display device to which a filter according to an embodiment of the present invention is applied. However, the filter may be attached on various display devices.

As described above, according to the above embodiments of the present invention, an emission color of a PDP may be a bluish white using a filter providing white balance in a negative region of an MPCD. Thus, visibility of the PDP may be improved.

Exemplary embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. A filter for a plasma display panel (PDP), the filter configured to provide a white balance of the PDP viewed through the filter in a negative region of a minimum perceptible color difference (MPCD).

2. A filter according to claim 1, wherein an optical transmittance curve of the filter has first, second, and third absorption peaks, wherein:
the first absorption peak is in a wavelength region of about 470 nm to about 520 nm;
the second absorption peak is in a wavelength region of about 520 nm to about 560 nm; and
the third absorption peak is in a wavelength region of about 560 nm to about 610 nm.

3. A filter according to claim 2, wherein a transmittance of the first absorption peak is smaller than a transmittance of the second absorption peak and larger than a transmittance of the third absorption peak.

4. A filter according to claim 2, wherein:
a transmittance of the first absorption peak is about 20% to about 50%;
a transmittance of the second absorption peak is about 40% to about 60%; and
a transmittance of the third absorption peak is about 5% to about 25%.

5. A filter according to any one of claims 2 to 4, further comprising a near infrared shielding layer.

6. A filter according to any one of claims 2 to 5, further comprising an electromagnetic wave and/or static electricity blocking layer.

7. A filter according to claim 6, wherein the electromagnetic wave and/or static electricity blocking layer comprises fiber meshes, metal meshes, or a conductive layer.

8. A filter according to any one of claims 2 to 7, comprising an antireflection layer.

9. A filter according to any preceding claim, wherein colour absorption of the filter is controlled by pigments or stains.

10. A filter according to Claim 9, wherein the pigments or stains are either coated or deposited on a transparent layer of the filter, included within the transparent layer, or included in an adhesive layer used to secure the filter to the PDP.

11. A plasma display device, comprising:
a plasma display panel (PDP) configured to display an image;
a driving circuit substrate configured to supply driving signals and electricity to the PDP and to control the PDP;
a chassis configured to support the PDP and the driving circuit substrate; and
a filter according to any one of Claims 1 to 9 arranged on a front surface of the PDP.
